# EUROPÄISCHE PATENTSCHRIFT

(11) **EP 2 029 404 B1**
(45) Veröffentlichungstag und Bekanntmachung des Hinweises auf die Patenterteilung: **12.10.2011**
(21) Anmeldenummer: 07724449.9
(22) Anmeldetag: 21.04.2007
(51) Int. Cl.: B60T 8/1761

(54) **ANTIBLOCKIERSYSTEM, INSBESONDERE FÜR GELÄNDEGÄNGIGE FAHRZEUGE**
ANTILOCK BRAKING SYSTEM, PARTICULARLY FOR OFF-ROAD VEHICLES
SYSTÈME ANTIBLOCAGE, DESTINÉ EN PARTICULIER À DES VÉHICULES TOUT TERRAIN

(30) Priorität: 26.05.2006 DE 102006024617
(43) Veröffentlichungstag der Anmeldung: 04.03.2009
(73) Patentinhaber: Volkswagen Aktiengesellschaft, 38436 Wolfsburg (DE)
(72) Erfinder: WILLMANN, Christian, 38165 Lehre (DE)
(86) Internationale Anmeldenummer: PCT/EP2007/003517
(87) Internationale Veröffentlichungsnummer: WO 2007/137654

(56) Entgegenhaltungen:
- WO-A-91/04892
- DE-A1- 2 258 317
- DE-A1- 19 955 512
- US-A1- 2005 140 207

## Beschreibung

Die Erfindung bezieht sich auf ein Antiblockiersystem, insbesondere für geländegängige Fahrzeuge, mit einem Standard-Regelmodus und einem Offroad-Regelmodus, wobei im Offroad-Regelmodus ein höherer Schlupf zugelassen wird als im Standard-Regelmodus. Weiterhin bezieht sich die Erfindung auf ein entsprechendes Verfahren in Form einer Regelstrategie.

Aus der EP 0 475 010 A2 und der DE 102 53 536 A1 ist jeweils ein Antiblockiersystem bekannt, das einen zusätzlichen Regelmodus für den Offroadbetrieb aufweist. Grund hierfür ist die Tatsache, dass herkömmliche Antiblockiersysteme für den Straßenbetrieb ausgelegt sind. Hierbei wird nur ein geringer Radschlupf bis maximal etwa 20 % zugelassen und ein Blockieren der Fahrzeugräder verhindert. Auf festem Untergrund oder bei vereister Straße wird hierdurch während eines Bremsvorgangs die Manövrierfähigkeit des Fahrzeugs aufrechterhalten.

Ein herkömmlicher Standard-Regelmodus wird beispielsweise in der DE 39 16 513 A1 offenbart. Dort wird im Fahrbetrieb eine Schlupfregelung an den jeweiligen Untergrund angepasst, indem derjenige Schlupfzustand eingestellt wird, bei dem ein Reibwertmaximum auftritt. Dazu wird der Schlupfwert in der Regelung sukzessive erhöht, bis das Reibwertmaximum erreicht ist. Eine Systemoptimierung für hohe Fahrbahnreibwerte durch Anpassung der Regelungsschwellen an den Haftwert der Reifen wird in der DE 102 25 121 A1 beschrieben.

Eine solche Auslegung ist jedoch bei losen Untergründen wie Schotter, Sand, Schnee oder Gras nicht optimal, da in einer solchen Situation mit deutlich höheren Radschlupfwerten bis hin zu einem zeitweiligen Blockieren der Fahrzeugräder kürzere Bremswege erzielt werden können. Durch den höheren Radschlupf bildet sich während eines Bremsvorgangs vor den Rädern ein Keil aus dem Material des Untergrunds, der zur Verkürzung des Bremswegs beiträgt.

Bei derartigen Untergründen existiert außerdem kein ausgeprägtes Reibwertmaximum, an dem eine Schlupfregelung ansetzen könnte. Nach dem Standard-Regelmodus der DE 39 16 513 A1 wird auch in einem solchen Fall der Schlupfwert sukzessive erhöht. Mangels eines Reibwertmaximums wird dieser Vorgang jedoch grenzwertgesteuert abgebrochen und der grenzwertnächste Schlupfwert eingestellt. Dieser ist jedoch dann zu gering und führt bei losen Untergründen nicht zu einem optimalen Bremsweg.

In der EP 0 475 010 A2 wird daher vorgeschlagen, mittels eines Geländeschalters den Regelmodus des Antiblockiersystems von einem Standard-Regelmodus auf einen Offroad-Regelmodus umzuschalten, in dem höhere Radschlupfwerte als im Standard-Regelmodus zugelassen werden. Insbesondere ist im Offroad-Regelmodus auch ein Blockieren der Räder für eine Dauer von etwa 240 ms gestattet. Aus Sicherheitsgründen wird der dort vorgeschlagene Offroad-Regelmodus nur unterhalb einer Fahrzeuggeschwindigkeit von ca. 40 km/h zugelassen. Wird der Geländeschalter bei höheren Geschwindigkeiten betätigt, so schaltet die Regellogik erst bei Unterschreiten der Grenzgeschwindigkeit selbstständig auf den Offroad-Regelmodus um. Falls das Fahrzeug wieder auf einer normalen Straße fährt, ist der Geländeschalter auf die normale Stellung umzulegen, um Beschädigungen der Reifen zu vermeiden.

In der DE 102 53 536 A1 wird zusätzlich vorgeschlagen, das Gelände aus bestimmten Merkmalen des Radverhaltens selbsttätig zu erkennen, wodurch sich ein besonderer Schalter einsparen lässt.

Weiterhin ist aus der DE 42 39 177 A1 bekannt, die Blockierschutzregelung eines Antiblockiersystems an eine Fahrbahn ohne ausgeprägtes Kraftschlussmaximum anzupassen, indem die Regelschwellen in Richtung auf einen höheren zulässigen Radschlupf angehoben werden. Zur Fahrbahnerkennung wird aus dem Drehverhalten der einzelnen Rädern und aus der Fahrzeugreferenzgeschwindigkeit der zeitliche Verlauf der Fahrzeugverzögerung und des mittleren Schlupfes abgeleitet. Aus einem Vergleich der Phasenlage der Fahrzeugverzögerung und des mittleren Schlupfes wird dann auf die Fahrbahnbeschaffenheit geschlossen.

Ferner ist aus der DE 198 34 167 A1 bekannt, aus einer Kraftschlußbedingung zunächst zu ermitteln, ob ein Fahrbahnzustand mit geringen Fahrbahnreibwerten, also ein Fahren auf Schnee, Sand, Geröll oder dergleichen stattfindet. Ist dies der Fall, wird der Standard-Regelmodus des Antiblockiersystems abgeschaltet. Dazu können die betreffenden Bremsenventile offen gehalten werden, so dass sich ein erhöhter Bremsdruck aufbaut und sich dementsprechend höhere Schlupfwerte ergeben als im Standard-Regelmodus.

Ein weiteres Konzept zur Verkürzung des Bremswegs bei losem Untergrund wird in der DE 196 01 529 A1 offenbart. In einer Offroad-Fahrsituation, die beispielsweise anhand von Fahrwerkschwingungen selbsttätig erkannt werden kann, wird ein Offroad-Regelmodus aktiviert, bei dem an der Radbremse des Rades, das als erstes die vorgegebenen Normal-Regelschwellen überschreitet, abweichend von dem Standard-Regelmodus ein Bremsdruckabbau unterbunden und der Bremsdruck an diesem Rad solange konstant gehalten wird, bis eine Wiederbeschleunigung dieses Rades einsetzt. Gleichzeitig wird gewährleistet, dass stets nur für ein Rad einer Achse der Bremsdruck konstant gehalten wird, während für das andere Rad der Standard-Regelmodus aufrechterhalten wird.

Weiterhin ist aus der DE 199 49 286 A1 eine Schtechtwegeerkennung anhand von Querdynamikgrößen bekannt. Zudem wird in der DE 199 49 286 A1 vorgeschlagen, die Regelschwellen zur Regelung einer Fahrzeugbewegung in Abhängigkeit der Schlechtwegeerkennung unempfindlicher zu gestalten, um beim Fahren in Spurrillen oder auf Schotterpisten unnötige Regeleingriffe zu vermeiden und die Traktion zu verbessern.

Vor diesem Hintergrund liegt der Erfindung die Aufgabe zu Grunde, das Bremsverhalten eines Kraftfahrzeugs, dass mit einem Antiblockiersystem ausgestattet ist, mit einfachen Mitteln und ohne Mitwirkung des Fahrers an unterschiedlichste Fahrbahnbeschaffenheiten anzupassen.

Diese Aufgabe wird durch ein Antiblockiersystem mit den Merkmalen von Patentanspruch 1 gelöst. Dieses umfasst einen Standard-Regelmodus und einen Offroad-Regelmodus, in dem gegenüber dem Standard-Regelmodus höhere Schlupfwerte an den Fahrzeugrädern zugelassen werden. Das erfindungsgemäße Antiblockiersystem umfasst weiterhin Mittel zur Ermittlung der absoluten Fahrzeugverzögerung während eines Bremsvorgangs, Mittel zum Vergleichen der Fahrzeugverzögerung mit einem vorgegebenen Wertebereich, und Mittel zum selbsttätigen Schalten des Regelmodus des Antiblockiersystems derart, dass der Offroad-Regelmodus unabhängig von einer Getriebestellung des Fahrzeugs eingestellt wird, wenn die ermittelte Fahrzeugverzögerung in den vorgegebenen Wertebereich fällt.

Hierdurch ist gewährleistet, dass unabhängig von der vom Fahrer gewählten Getriebestellung, insbesondere der Wahl einer Geländeübersetzung, die im folgenden auch als Low-Gear bezeichnet wird, auf losen Untergründen wie zum Beispiel Schotter, Sand, Schnee oder Gras mit einem hohen Radschlupf bis hin zu einem temporären Blockieren der Fahrzeugräder gebremst werden kann, um dem Bremsweg durch Bremskeilwirkung zu verkürzen. Gleichzeitig ist sichergestellt, dass bei einem Übergang zu Untergründen mit höheren oder geringeren Fahrbahnreibwerten das Antiblockiersystem automatisch mit dem Standard-Regelmodus arbeitet, um auch hier ein optimales Bremsverhalten zu erzielen.

Versuche haben gezeigt, dass ein Umschalten zwischen dem Standard-Regelmodus und dem Offroad-Regelmodüs allein auf der Grundlage der absoluten Fahrzeugverzögerung bereits sehr gute Ergebnisse liefert. Bei geländegängigen Fahrzeugen wird sowohl in der Low-Gear-Getriebestellung als auch in einer High-Gear-Getriebestellung immer die richtige ABS-Regelstrategie für den jeweiligen Untergrund zur Verfügung gestellt, ohne dass der Fahrer hierauf Einfluss nehmen müsste.

Überdies kommt die erfindungsgemäße Lösung prinzipiell ohne eigene Untergrunderkennung aus. Um die jeweilige ABS-Regelstrategie zu ermitteln, wird zunächst ein Bremsvorgang eingeleitet. Wird so stark gebremst, dass es zu einem Ansprechen des Antiblockiersystems kommt, wird sofort die Fahrzeugverzögerung betrachtet und anhand dieser der richtige Regelmodus ausgewählt. Eine derartige Abfrage kann aufgrund eines minimalen Rechenaufwands mit hoher Geschwindigkeit durchgeführt werden, so dass sich eine hohe Systemdynamik ergibt.

Das erfindungsgemäße Antiblockiersystem lässt sich daher mit verhältnismäßig geringem technischen Aufwand verwirklichen. Es ist überdies in seiner Bedienung für den Fahrer unkompliziert. Insbesondere kann eine Fehlbedienung durch den Fahrer ausgeschlossen werden, wie sie bei schalterbetätigten Systemen oder von der Getriebestellung abhängigen Systemen gegeben ist.

Weitere, vorteilhafte Ausgestaltungen der Erfindung sind in den Patentansprüchen angegeben.

Bevorzugt wird der Offroad-Regelmodus solange aufrechterhalten, wie die ermittelte Fahrzeugverzögerung in den vorgegebenen Wertebereich fällt.

Weiterhin ist es möglich, die Fahrzeugverzögerung während eines Bremsvorgangs fortlaufend auszuwerten, wodurch der Regelmodus bei einem Untergrundwechsel automatisch angepasst werden kann. Der Zeitverzug vom realen Übergang bis zur Erkennung liegt in der Größenordnung von lediglich etwa 300 ms und ist damit sehr kurz.

Gemäß einer vorteilhaften Ausgestaltung ist der Wertebereich durch einen oberen und einen unteren Grenzwert für die Verzögerung in Fahrzeuglängsrichtung definiert, wodurch sich ein loser Untergrund mit hoher Treffsicherheit identifizieren lässt.

Wird der untere Grenzwert unterschritten, was in der Regel bei glatter oder vereister Fahrbahn der Fall ist, so wird unabhängig von der Getriebestellung des Fahrzeugs der Standard-Regelmodus eingestellt. Vorzugsweise liegt der untere Grenzwert im Bereich von 0,2 g bis 0,4 g.

Bei Überschreiten des oberen Grenzwerts, der vorzugsweise im Bereich von 0,6 g bis 0,7 g liegt, wird auf einen festen Fahrbahnbelag wie Beton, Asphalt oder Kopfsteinpflaster geschlossen und unabhängig von der Getriebestellung des Fahrzeugs der Standard-Regelmodus eingestellt.

Gemäß einer weiteren, vorteilhaften Ausgestaltung der Erfindung ist ein Längsbeschleunigungssensor zur Bestimmung der Fahrzeugverzögerung vorgesehen. Prinzipiell kann die Längsbeschleunigung auch aus der Fahrgeschwindigkeit oder den Raddrehzahlen ermittelt werden. Tritt an den Fahrzeugrädern Schlupf auf, ist eine daraus folgende Abschätzung der Längsbeschleunigung zwangsläufig mit Ungenauigkeiten behaftet. Die unmittelbare Messung der Fahrzeuglängsbeschleunigung ist daher vorzuziehen, da diese die tatsächliche Bewegung des Fahrzeugs repräsentiert und damit keinen Störeinflüssen oder Fehlern bei der Abschätzung unterworfen ist.

In bestimmten Situationen ist trotz eines losen Untergrunds der Offroad-Regelmodus nicht unbedingt wünschenswert. Diese Situationen können gegebenenfalls durch eine individuelle Abfrage ausgenommen werden. Bevorzugt werden hierzu Mittel zum Deaktivieren des Offroad-Regelmodus vorgesehen, so dass beispielsweise bei Überschreiten einer vorgegebenen Gierrate in den Standard-Regelmodus geschaltet wird.

Die Deaktivierung kann unabhängig von einem Eingreifen der Regelung vorgenommen werden, so dass sich hierdurch keine Dynamikverluste beim Übergang zum Offroad-Regelmodus ergeben.

Weiterhin kann bei Überschreiten eines vorgegebenen Lenkwinkels und/oder bei Überschreiten einer vorgegebenen Fahrgeschwindigkeit in den Standard-Regelmodus geschaltet werden.

Ferner können Mittel zum Deaktivieren des Offroad-Regelmodus vorgesehen sein, dergestalt, dass bei Erkennen einer µ-Splitsituation an den Rädern einer Achse in den Standard-Regelmodus geschaltet wird.

Insbesondere bei geländegängigen Fahrzeugen können zusätzlich Mittel zur Schlechtwegstreckenerkennung vorgesehen sein und der untere Grenzwert des Wertebereichs der Fahrzeugverzögerung in Abhängigkeit der erfassten Wegstreckenqualität eingestellt werden. Dies gestattet eine noch weitergehende Optimierung des Betriebsbereichs für den Offroad-Regelmodus. So kann beispielsweise bei schlechterer Wegstreckenqualität ein niedrigerer unterer Grenzwert und bei besserer Wegstreckenqualität ein höherer unterer Grenzwert eingestellt werden.

Da in einer Low-Gear-Getriebestellung in der Regel davon auszugehen ist, dass das Fahrzeug im Gelände fährt, kann in dieser Getriebestellung eine Abfrage der Schlechtwegstreckenerkennung unterbleiben. Diese wird bevorzugt lediglich in einer High-Gear-Getriebestellung berücksichtigt.

Gemäß einer weiteren, vorteilhaften Ausgestaltung der Erfindung wird im Offroad-Regelmodus ein erhöhter Bremsschlupf bis zum Blockieren der Räder lediglich an der Vorderachse zugelassen.

Die oben genannte Aufgabe wird weiterhin durch eine Regelstrategie eines Antiblockiersystems gelöst, die einen Standard-Regelmodus und einen Offroad-Regelmodus umfasst, wobei im Offroad-Regelmodus höhere Schlupfwerte zugelassen wird als im Standard-Regelmodus. Während eines Bremsvorgangs wird die absolute Fahrzeugverzögerung ermittelt. Die Fahrzeugverzögerung wird dann mit einem vorgegebenen Wertebereich verglichen. Wenn die ermittelte Fahrzeugverzögerung in den vorgegebenen Wertebereich fällt, wird der Regelmodus des Antiblockiersystems unabhängig von einer Getriebestellung des Fahrzeugs selbsttätig in den Offroad-Regelmodus geschaltet.

Für das erfindungsgemäße Verfahren ergeben sich die oben bereits erläuterten Vorteile. In vorteilhafter Ausgestaltung kann die Fahrzeugverzögerung während eines Bremsvorgangs fortlaufend gemessen und mit dem vorgegebenen Wertebereich verglichen werden. Bevorzugt ist dieser Wertebereich durch einen oberen und einen-unteren Grenzwert für die Verzögerung in Fahrzeuglängsrichtung definiert.

Nachfolgend wird die Erfindung anhand von in der Zeichnung dargestellten Ausführungsbeispielen näher erläutert. Die Zeichnung zeigt in:
- Figur 1: eine schematische Ansicht eines ersten Ausführungsbeispiels für eine Regelstrategie eines Antiblockiersystems eines Kraftfahrzeugs,
- Figur 2: eine schematische Ansicht eines zweiten Ausführungsbeispiels für eine Regelstrategie eines Antiblockiersystems eines Kraftfahrzeugs, und in
- Figur 3: ein Diagramm zur Veranschaulichung des Verlauf der Fahrzeugverzögerung und des Schlupfes an den Vorderrädern bei einem Bremsvorgang auf losem Untergrund.

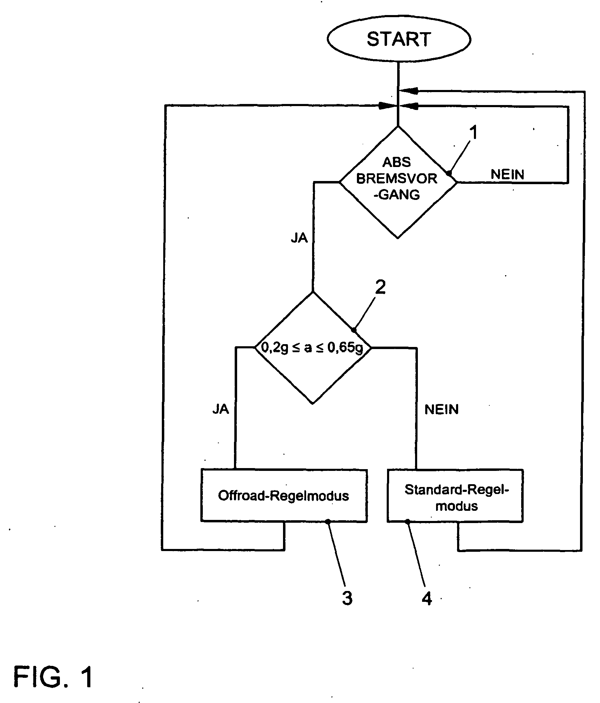

Die in Figur 1 dargestellte Regelstrategie geht von einem Antiblockiersystem aus, das einen Standard-Regelmodus und einen Offroad-Regelmodus aufweist.

Der Standard-Regelmodus ist auf den Fahrbetrieb auf festen Untergründen abgestimmt und derart konfiguriert, dass hohe Radschlupfwerte (> 0,2) an den Fahrzeugrädern während eines Bremsvorgangs verhindert werden, um die Manövrierfähigkeit des Fahrzeugs aufrechtzuerhalten und ein Ausbrechen zu vermeiden. Entsprechende Regelalgorithmen sind dem Fachmann aus dem Stand der Technik bekannt. Hierdurch werden bei festem Untergrund sowie bei vereister Fahrbahn die besten Bremsergebnisse unter Berücksichtigung des Bremswegs und der Spurtreue erzielt.

Im Offroad-Regelmodus wird hingegen an den Vorderrädern auch ein Schlupf zugelassen, der höher ist als der im Standard-Regelmodus maximal zugelassene Schlupf. Dies ist insbesondere beim Bremsen auf losen Untergründen wie Schotter, Schnee, Sand, Gras oder dergleichen vorteilhaft, da hierbei das zeitweilig aufgestaute Material des Untergrunds vor dem jeweiligen Fahrzeugrad hergeschoben wird und einen Bremskeil bildet.

Mit der vorliegenden Erfindung wird eine besonders effiziente Strategie für den Einsatz des jeweils geeigneten Regelmodus vorgeschlagen, die ohne Mitwirkung des Fahrers selbsttätig erfolgt, so dass eine Fehlbedienung praktisch ausgeschlossen ist. Es hat sich gezeigt, dass eine überraschend einfache, nämlich lediglich von der Längsverzögerung des Fahrzeugs abhängige Entscheidungslogik in jeder Situation zu guten Bremsergebnissen führt.

Aus diesem Grunde weist das Antiblockiersystem Mittel zur Ermittlung der absoluten Fahrzeugverzögerung während eines Bremsvorgangs auf. Die Fahrzeugverzögerung wird anhand solcher Daten erfasst, welche eine möglichst genaue Bestimmung der Fahrzeugverzögerung gestatten. Hierzu können am Fahrzeug vorhandene Daten ausgelesen werden. Denkbar ist weiterhin, die Längsbeschleunigung anhand der Raddrehzahlen abzuschätzen. Vorzugsweise kommt jedoch ein Längsbeschleunigungssensor zum Einsatz, mit dem sich die tatsächliche Fahrzeugverzögerung frei von Störungen und Abschätzfehlern bestimmen lässt.

Das Antiblockiersystem umfasst weiterhin Mittel zum Vergleichen der Fahrzeugverzögerung mit einem vorgegebenen Wertebereich. Dieser Wertebereich bildet die Fahrzeugverzögerung ab, die bei einem Bremsvorgang auf losem Untergrund erwartet wird.

Der Wertebereich wird durch einen oberen Grenzwert aᵥₘₐₓ und einen unteren Grenzwert aᵥₘᵢₙ für die Verzögerung in Fahrzeuglängsrichtung definiert. Mit dem unteren Grenzwert aᵥₘᵢₙ, der im Bereich von 0,2 g bis 0,4 g liegt, erfolgt eine Abgrenzung gegenüber einer vereisten Fahrbahn. Über den oberen Grenzwert aᵥₘₐₓ im Bereich von 0,6 g bis 0,7 g wird zwischen einem Bremsvorgang auf losem Untergrund und einem Bremsvorgang auf griffigem Untergrund unterschieden.

Ferner umfasst das Antiblockiersystem Mittel zum selbsttätigen Schalten des Regelmodus. Fällt die ermittelte, vorzugsweise gemessene Fahrzeugverzögerung in den vorgegebenen Wertebereich, wird der Offroad-Regelmodus eingestellt und zwar prinzipiell unabhängig von einer vom Fahrer gewählten Getriebestellung des Fahrzeugs.

Insbesondere bei geländegängigen Fahrzeugen, die eine Low-Gear-Stellung für das Fahren im Gelände und eine High-Gear-Stellung für das Fahren auf der Straße besitzen, ist herkömmlicher Weise die Umschaltung zwischen einem Standard-Regelmodus und einem Offroad-Regelmodus an die Getriebestellung gekoppelt. Da jedoch die Möglichkeit besteht, dass das Fahrzeug in der Low-Gear-Stellung auch auf Asphalt oder auf vereister Fahrbahn gefahren wird, muss dort die Offroad-Regelung schwach eingestellt werden, um genügend Stabilität des Fahrzeugs zu gewährleisten. In einer solchen Situation ergeben sich durch den erhöhten Radschlupf an den Vorderrädern jedoch Bremswegnachteile. In der High-Gear-Stellung steht hingegen zu keinem Zeitpunkt ein Offroad-Regelmodus zur Verfügung.

Durch ein Umschalten zwischen den einzelnen Regelmodi allein in Abhängigkeit der absoluten Fahrzeugverzögerung werden diese Nachteile vermieden. Gegenüber der vorstehenden Auslegung wird auf losem Untergrund ein Bremsweggewinn von bis zu 25% erzielt, da der Offroad-Regelmodus stärker eingestellt werden kann.

Figur 1 zeigt ein einfaches Beispiel für eine erfindungsgemäße Regelstrategie. Solange kein Bremsvorgang mit merklichem Radschlupf auftritt, werden keine Eingriffe unternommen. Kommt es jedoch bei einem starken Bremsen zu einem Eintritt in das Antiblockiersystem (Schritt 1), das sich nach Initialisieren des Systems zunächst im Standard-Regelmodus befindet, wird in einem nächsten Schritt 2 sofort die Fahrzeugverzögerung a betrachtet. Fällt diese in den vorgegebenen Wertebereich für losen Untergrund, der beispielsweise mit 0,2 g bis 0,65 g vorgegeben sein kann, wird in einem weiteren Schritt 3 sofort in den Offroad-Regelmodus geschaltet. Andernfalls wird mit dem Standard-Regelmodus weiter geregelt (vgl. Schritt 4).

Die Routine kehrt anschließend zu Schritt 1 zurück und beginnt erneut. Durch die fortlaufende Auswertung der jeweils aktuellen Fahrzeugverzögerung kann während eines Bremsvorgangs der Regelmodus kontinuierlich an den jeweiligen Untergrund angepasst werden, wobei aufgrund der beschriebenen Entscheidungslogik schnelle Reaktionszeiten zwischen dem Eintritt des Ereignisses und dem Umschalten des Regelmodus in der Größenordnung von 300 ms realisiert werden können.

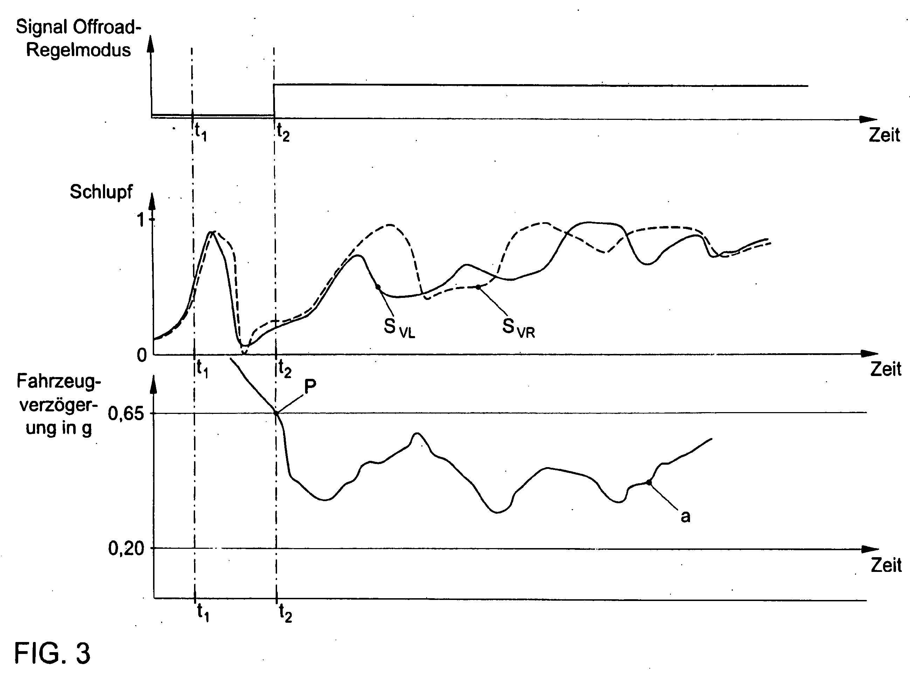

Figur 3 zeigt einen Bremsvorgang, bei dem ein mit dem oben beschriebenen Antiblockiersystem ausgestattetes Fahrzeug während eines Bremsvorgangs zum Zeitpunkt t₁ von einem griffigen Untergrund auf losen Untergrund gelangt. Hierbei kommt es zu einem deutlichen Abfall der Fahrzeugverzögerung a, die den oberen Grenzwert von 0,65 g unterschreitet, weil das Fahrzeug die Bremskraft nicht mehr so gut auf den Untergrund übertragen kann.

Dies kann weiterhin am Verlauf des Schlupfes s der Vorderräder S_{VL} und S_{VR} beobachtet werden, der beim Übergang auf losen Untergrund zunächst deutlich zunimmt. Mit Ansprechen der Regelung des Antiblockiersystems wird unmittelbar die Fahrzeugbeschleunigung a betrachtet, die im Punkt P in den vorgegebenen Wertebereich für losen Untergrund mit 0,2 g bis 0,65 g eintritt. Unmittelbar darauf wird zum Zeitpunkt t₂ ein Signal zum Umschalten in den Offroad-Regelmodus generiert, in dem, wie der weitere Schlupfverlauf zeigt, an den Vorderrädern links und rechts höhere Schlupfwerte S_{VL} und S_{VR} bis zum Blockieren zugelassen werden, um eine Keilwirkung an den Rädern zur Bremswegverkürzung auszunutzen.

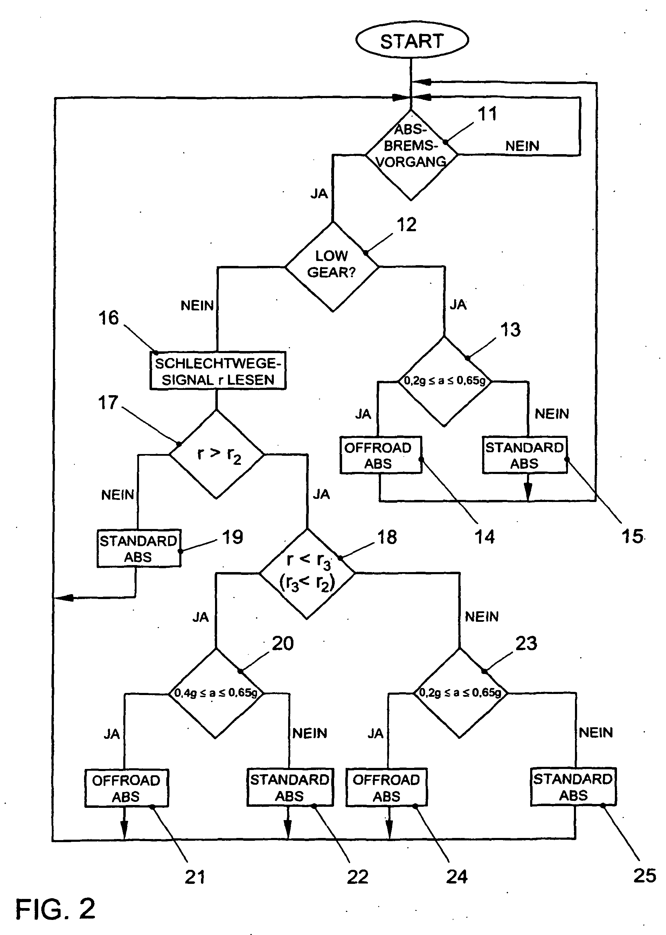

Figur 2 zeigt ein weiteres Beispiel für eine erfindungsgemäße Regelstrategie. Diese unterscheiden sich von der Regelstrategie nach Figur 1 unter anderem dadurch, dass die Grenzwerte des Wertebereichs, in dem in den Offroad-Regelmodus umgeschaltet wird, in bestimmten Situationen modifiziert werden können.

Eine Möglichkeit besteht darin, bei geländegängigen Fahrzeugen, welche zwischen einer Lot-Gear-Getriebestellung und einer High-Gear-Getriebestellung unterscheiden, lediglich in der High-Gear-Getriebestellung eine solche Differenzierung vorzunehmen, da in der Low-Gear-Getriebestellung in der Regel vom Fahren im Gelände ausgegangen werden kann. Gleichwohl erfolgt auch in diesem Fall die Wahl des Regelmodus allein in Abhängigkeit der Fahrzeugverzögerung a unabhängig von der gewählten Getriebestellung.

Solange kein Bremsvorgang mit merklichem Radschlupf auftritt, werden bei der Regelstrategie nach Figur 2 keine Eingriffe unternommen. Kommt es jedoch bei einem starken Bremsen zu einem Eintritt in das Antiblockiersystem (Schritt 11), wird bei Low-Gear ohne weiteres wie in Figur 1 verfahren (Schritte 12 bis 15). ,

Andernfalls wird eine Schlechtwegeerkennung ausgelesen (Schritt 16) und in Abhängigkeit derselben der untere Grenzwert aᵥₘᵢₙ angepasst. Dazu wird in weiteren Schritten 17 und 18 geprüft, ob das Schlechtwegesignal r in bestimmte, vorgegebene Bereiche r<r2, r2<r<r3 oder r>r3 fällt. Für den erstgenannten Fall bei verhältnismäßig guter Fahrbahn wird der Standard-Regelmodus beibehalten (Schritt 19). Im zweiten Fall (Schritt 20) wird der untere Grenzwert aᵥₘᵢₙ, beispielsweise auf 0,4 g angehoben. Fällt die aktuelle Fahrzeugverzögerung a in den vorgegebenen Wertebereich, wird in den Offroad-Regelmodus umgeschaltet (Schritt 21), ansonsten im Standard-Regelmodus weitergeregelt (Schritt 22). Im dritten Fall bei sehr schlechtem Untergrund wird wiederum wie in Figur 1 verfahren (Schritte 23 bis 25).

Anschließend kehrt die Routine jeweils zu Schritt 11 zurück und beginnt erneut, um eine kontinuierliche Anpassung des Regelmodus während eines Bremsvorgangs zu gewährleisten.

Weiterhin kann in bestimmten Situationen eine Deaktivierung des Offroad-Regelmodus erfolgen.

So ist es beispielsweise möglich, bei einem verstärkten Gieren des Fahrzeugs, das beispielsweise bei stark unterschiedlichen Reibwerten an den Rädern einer Achse auftreten kann (µ-Splitsituation), in den Standard-Regelmodus zu geringeren Schlupfwerten zurückzukehren und der Manövrierbarkeit des Fahrzeugs höhere Priorität einzuräumen. Dazu wird bei Überschreiten einer vorgegebenen Gierrate automatisch in den Standard-Regelmodus geschaltet. Die betreffende Gierrate kann gegebenenfalls fahrgeschwindigkeits- und fahrtrichtungsabhängig eingestellt werden. Eine µ-Splitsituation kann auch auf andere Art und Weise erkannt und als Anlass für eine Deaktivierung des Offroad-Regelmodus verwendet werden.

Ferner kann bei Überschreiten eines vorgegebenen Lenkwinkels in den Standard-Regelmodus geschaltet werden. Die Lenkwinkelgrenzwerte können dabei ebenfalls fahrgeschwindigkeitsabhängig vorgegeben werden, wobei bei der Grenzwert des Lenkwinkels für zunehmende Fahrgeschwindigkeiten abnimmt. Überdies kann die Grenzwertvorgabe in Abhängigkeit der gewählten Getriebestellung, High-Gear oder Low-Gear, und gegebenenfalls weiterhin in Abhängigkeit der Schlechtwegeerkennung erfolgen, wobei bei weniger schlechter Wegstrecke ein Verlassen des Offroad-Regelmodus bei kleineren Lenkwinkeln vorgesehen wird, als bei schlechterer Wegstrecke oder in der Low-Gear-Stellung.

Weiterhin ist es möglich, bei Überschreiten einer vorgegebenen Fahrgeschwindigkeit den Offroad-Regelmodus zu deaktivieren, bzw. ein Verlassen des Ständard-Regelmodus zu unterbinden.

Die Erfindung wurde vorstehend anhand bevorzugter Ausführungsbeispiele sowie Abwandlungen derselben näher erläutert. Sie ist jedoch nicht hierauf beschränkt, sondern umfasst alle durch die Patentansprüche definierten Ausgestaltungen.

## Patentansprüche

1. Antiblockiersystem für Fahrzeuge mit einer ersten High-Gear-Getriebestellung für das Fahren auf der Straße und einer zweiten Low-Gear-Getriebestellung für das Fahren im Gelände, mit einem Standard-Regelmodus und einem Offroad-Regelmodus, wobei im Offroad-Regelmodus höhere Schlupfwerte zugelassen werden als im Standard-Regelmodus,
**gekennzeichnet durch**
- Mittel zur Ermittlung der absoluten Fahrzeugverzögerung während eines Bremsvorgangs,
- Mittel zum Vergleichen der Fahrzeugverzögerung mit einem vorgegebenen Wertebereich, und
- Mittel zum selbsttätigen Schalten des Regelmodus des Antiblockiersystems derart, dass während eines Bremsvorgangs mit Regeleingriff des Antiblockiersystems der Offroad-Regelmodus unabhängig von der Getriebestellung des Fahrzeugs eingestellt wird, wenn die ermittelte Fahrzeugverzögerung in den vorgegebenen Wertebereich fällt.

2. Antiblockiersystem nach Anspruch 1, **dadurch gekennzeichnet, dass** der Offroad-Regelmodus solange aufrechterhalten wird, wie die ermittelte Fahrzeugverzögerung in den vorgegebenen Wertebereich fällt.

3. Antiblockiersystem nach Anspruch 1 oder 2, **dadurch gekennzeichnet, dass** die Fahrzeugverzögerung während eines Bremsvorgangs fortlaufend ausgewertet wird.

4. Antiblockiersystem nach einem der Ansprüche 1 bis 3, **dadurch gekennzeichnet, dass** der Wertebereich durch einen oberen und einen unteren Grenzwert für die Verzögerung in Fahrzeuglängsrichtung definiert ist.

5. Antiblockiersystem nach Anspruch 4, **dadurch gekennzeichnet, dass** bei Unterschreiten des unteren Grenzwerts unabhängig von der Getriebestellung des Fahrzeugs der Standard-Regelmodus eingestellt wird.

6. Antiblockiersystem nach Anspruch 4 oder 5, **dadurch gekennzeichnet, dass** der untere Grenzwert im Bereich von 0,2 g bis 0,4 g liegt.

7. Antiblockiersystem nach einem der Ansprüche 4 bis 6, **dadurch** gekenntzeichnet, das bei Überschreiten des oberen Grenzwerts unabhängig von der Getriebestellung des Fahrzeugs der Standard-Regelmodus eingestellt wird.

8. Antiblockiersystem nach einem der Ansprüche 4 bis 7, **dadurch gekennzeichnet**, das der obere Grenzwert im Bereich von 0,6 g bis 0,7 g liegt.

9. Antiblockiersystem nach einem der Ansprüche 1 bis 8, **dadurch gekennzeichnet, dass** ein Längsbeschleunigungssensor zur Bestimmung der Fahrzeugverzögerung vorgesehen ist.

10. Antiblockiersystem nach einem der Ansprüche 1 bis 9, **dadurch gekennzeichnet, dass** Mittel zum Deaktivieren des Offroad-Regelmodus vorgesehen sind, dergestalt, dass bei Überschreiten einer vorgegebenen Gierrate in den Standard-Regelmodus geschaltet wird.

11. Antiblockiersystem nach einem der Ansprüche 1 bis 10, **dadurch gekennzeichnet, dass** Mittel zum Deaktivieren des Offroad-Regelmodus vorgesehen sind, dergestalt, dass bei Überschreiten eines vorgegebenen Lenkwinkels in den Standard-Regelmodus geschaltet wird.

12. Antiblockiersystem nach einem der Ansprüche 1 bis 11, **dadurch gekennzeichnet**, das Mittel zum Deaktivieren des Offroad-Regelmodus vorgesehen sind, dergestalt, dass bei Erkennen einer Mü-Splitsituation an den Rädern einer Achse in den Standard-Regelmodus geschaltet wird.

13. Antiblockiersystem nach einem der Ansprüche 1 bis 12, **dadurch gekennzeichnet, dass** Mittel zum Deaktivieren des Offroad-Regelmödus vorgesehen sind, dergestalt, dass bei Überschreiten einer vorgegebenen Fahrgeschwindigkeit in den Standard-Regelmodus geschaltet wird.

14. Antiblockiersystem nach einem oder Ansprüche 1 bis 13, **dadurch gekennzeichnet, dass** Mittel zur Schlechtwegstreckenerkennung vorgesehen sind und der untere Grenzwert des Wertebereichs der Fahrzeugverzögerung in Abhängigkeit der erfassten Wegstreckenqualität eingestellt wird.

15. Antiblockiersystem nach Anspruch 14, **dadurch gekennzeichnet, dass** bei schlechterer Wegstreckenqualität ein niedrigerer unterer Grenzwert und bei besserer Wegstreckenqualität ein höherer unterer Grenzwert eingestellt wird.

16. Antiblockiersystem nach Anspruch 14 oder 15, **dadurch gekennzeichnet, dass** die Schtechtwegstreckenerkennung lediglich in einer High-Gear-Getriebestellung, jedoch nicht in einer Low-Gear-Getriebestellung des Fahrzeugs vorgesehen ist.

17. Antiblockiersystem nach einem der Ansprüche 1 bis 16, **dadurch gekennzeichnet, dass** im Offroad-Regelmodus ein erhöhter Bremsschlupf bis zum Blockieren der Räder lediglich an der Vorderachse zugelassen wird.

18. Regelstrategie eines Antiblockiersystems für Fahrzeuge mit einer ersten High-Gear-Getriebestellung für das Fahren auf der Straße und einer zweiten Low-Gear-Getriebestellung für das Fahren im Gelände, umfassend einen Standard-Regelmodus und einen Offroad-Regelmodus, wobei im Offroad-Regelmodus höhere Schlupfwerte zugelassen werden als im Standard-Regelmodus; **dadurch gekennzeichnet, dass** während eines Bremsvorgangs mit Regeleingriff des Antiblockiersystems
- die absolute Fahrzeugverzögerung ermittelt wird,
- die Fahrzeugverzögerung mit einem vorgegebenen Wertebereich verglichen wird, und
- der Regelmodus des Antiblockiersystems unabhängig von einer Getriebestellung des Fahrzeugs selbsttätig in den Offroad-Regelmodus geschaltet wird, wenn die ermittelte Fahrzeugverzögerung in den vorgegebenen Wertebereich fällt.

19. Regelstrategie nach Anspruch 18, **dadurch gekennzeichnet, dass** die Fahrzeugverzögerung während eines Bremsvorgangs fortlaufend gemessen und mit dem vorgegebenen Wertebereich verglichen wird.

20. Regelstrategie nach Anspruch 18 oder 19, **dadurch gekennzeichnet, dass** der Wertebereich durch einen oberen und einen unteren Grenzwert für die Verzögerung in Fahrzeuglängsrichtung definiert ist.

## Claims

1. Anti-lock brake system for vehicles having a first high-gear gearbox position for driving on the road and a second low-gear gearbox position for driving off-road, having a standard control mode and an off-road control mode, wherein in the off-road control mode higher slip values are permitted than in the standard control mode,
**characterized by**
- means for determining the absolute vehicle deceleration during a braking process,
- means for comparing the vehicle deceleration with a predefined value range, and
- means for automatically switching the control mode of the anti-lock brake system in such a way that during a braking process with control intervention by the anti-lock brake system the off-road control mode is set independently of the gearbox position of the vehicle if the determined vehicle deceleration is in the predefined value range.

2. Anti-lock brake system according to Claim 1, **characterized in that** the off-road control mode is maintained until the determined vehicle deceleration is in the predefined value range.

3. Anti-lock brake system according to Claim 1 or 2, **characterized in that** the vehicle deceleration is evaluated continuously during a braking process.

4. Anti-lock brake system according to one of Claims 1 to 3, **characterized in that** the value range is defined by an upper and lower limiting value for the deceleration in the longitudinal direction of the vehicle.

5. Anti-lock brake system according to Claim 4, **characterized in that** when the lower limiting value is undershot the standard control mode is set independently of the gearbox position of the vehicle.

6. Anti-lock brake system according to Claim 4 or 5, **characterized in that** the lower limiting value is in the range from 0.2 g to 0.4 g.

7. Anti-lock brake system according to one of Claims 4 to 6, **characterized in that** when the upper limiting value is exceeded, the standard control mode is set independently of the gearbox position of the vehicle.

8. Anti-lock brake system according to one of Claims 4 to 7, **characterized in that** the upper limiting value is in the range from 0.6 g to 0.7 g.

9. Anti-lock brake system according to one of Claims 1 to 8, **characterized in that** a longitudinal acceleration sensor is provided for determining the vehicle deceleration.

10. Anti-lock brake system according to one of Claims 1 to 9, **characterized in that** means are provided for deactivating the off-road control mode such that when a predefined yaw rate is exceeded, the system is switched into the standard control mode.

11. Anti-lock brake system according to one of Claims 1 to 10, **characterized in that** means are provided for deactivating the off-road control mode such that when a predefined steering angle is exceeded the system is switched into the standard control mode.

12. Anti-lock brake system according to one of Claims 1 to 11, **characterized in that** means are provided for deactivating the off-road control mode such that when a mu-split situation is detected at the wheels of an axle the system is switched into the standard control mode.

13. Anti-lock brake system according to one of Claims 1 to 12, **characterized in that** means are provided for deactivating the off-mode control mode such that when a predefined velocity is exceeded the system is switched into the standard control mode.

14. Anti-lock brake system according to one of Claims 1 to 13, **characterized in that** means are provided for detecting a poor-quality section of road and the lower limiting value of the value range of the vehicle deceleration is set as a function of the detected quality of the section of road.

15. Anti-lock brake system according to Claim 14, **characterized in that** when a poor-quality section of road is detected, a relatively low limiting value is set, and when a better-quality section of road is detected, a relatively high lower limiting value is set.

16. Anti-lock brake system according to Claim 14 or 15, **characterized in that** the detection of the poor-quality section of road is provided only in a high-gear gearbox position but not in a low-gear gearbox position of the vehicle.

17. Anti-lock brake system according to one of Claims 1 to 16, **characterized in that** in the off-road control mode an increased brake slip is permitted only at the front axle until the wheels lock.

18. Control strategy of an anti-lock brake system for vehicles having a first high-gear gearbox position for driving on the road and a second low-gear gearbox position for driving off-road, comprising a standard control mode and an off-road control mode, wherein in the off-road control mode higher slip values are permitted than in the standard control mode, **characterized in that** during a braking process with control intervention by the anti-lock brake system
- the absolute vehicle deceleration is determined,
- the vehicle deceleration is compared with a predefined value range,
and
- the control mode of the anti-lock brake system is switched automatically into the off-road control mode independently of a gearbox position of the vehicle if the determined vehicle deceleration is in the predefined value range.

19. Control strategy according to Claim 18, **characterized in that** the vehicle deceleration is measured continuously during a braking process and compared with the predefined value range.

20. Control strategy according to Claim 18 or 19, **characterized in that** the value range is defined by an upper and a lower limiting value for the deceleration in the longitudinal direction of the vehicle.

## Revendications

1. Système antiblocage pour véhicules comprenant une première position de boîte de vitesses à rapports hauts pour le déplacement sur route et une deuxième position de boîte de vitesses à rapports bas pour le déplacement tout-terrain, comprenant un mode de régulation standard et un mode de régulation tout-terrain, des valeurs de patinage plus élevées étant autorisées dans le mode de régulation tout-terrain que dans le mode de régulation standard,
**caractérisé par**
- des moyens pour déterminer le ralentissement absolu du véhicule pendant une opération de freinage,
- des moyens pour comparer le ralentissement du véhicule avec une plage de valeurs prédéfinie, et
- des moyens pour commuter automatiquement le mode de régulation du système antiblocage de telle sorte que pendant une opération de freinage avec intervention de régulation du système antiblocage, le mode de régulation tout-terrain est engagé indépendamment de la position de la boîte de vitesses du véhicule lorsque le ralentissement déterminé du véhicule se trouve dans la plage de valeurs prédéfinie.

2. Système antiblocage selon la revendication 1, **caractérisé en ce que** le mode de régulation tout-terrain est maintenu tant que le ralentissement déterminé du véhicule se trouve dans la plage de valeurs prédéfinie.

3. Système antiblocage selon la revendication 1 ou 2, **caractérisé en ce que** le ralentissement du véhicule est interprété continuellement pendant une opération de freinage.

4. Système antiblocage selon l'une des revendications 1 à 3, **caractérisé en ce que** la plage de valeurs est définie par une valeur limite supérieure et inférieure pour le ralentissement dans le sens longitudinal du véhicule.

5. Système antiblocage selon la revendication 4, **caractérisé en ce que** le mode de régulation standard est engagé en cas de franchissement vers le bas de la valeur limite inférieure, indépendamment de la position de la boîte de vitesses du véhicule.

6. Système antiblocage selon la revendication 4 ou 5, **caractérisé en ce que** la valeur limite inférieure est comprise dans la plage de 0,2 g à 0,4 g.

7. Système antiblocage selon l'une des revendications 4 à 6, **caractérisé en ce que** le mode de régulation standard est engagé en cas de franchissement vers le haut de la valeur limite supérieure, indépendamment de la position de la boîte de vitesses du véhicule.

8. Système antiblocage selon l'une des revendications 4 à 7, **caractérisé en ce que** la valeur limite supérieure est comprise dans la plage de 0,6 g à 0,7 g.

9. Système antiblocage selon l'une des revendications 1 à 8, **caractérisé en ce qu'**il est prévu un capteur d'accélération longitudinale destiné à déterminer le ralentissement du véhicule.

10. Système antiblocage selon l'une des revendications 1 à 9, **caractérisé en ce que** sont prévus des moyens de désactivation du mode de régulation tout-terrain, de telle sorte que le mode de régulation standard est engagé en cas de franchissement vers le haut d'un taux de lacet prédéfini.

11. Système antiblocage selon l'une des revendications 1 à 10, **caractérisé en ce que** sont prévus des moyens de désactivation du mode de régulation tout-terrain, de telle sorte que le mode de régulation standard est engagé en cas de franchissement vers le haut d'un angle de direction prédéfini.

12. Système antiblocage selon l'une des revendications 1 à 11, **caractérisé en ce que** sont prévus des moyens de désactivation du mode de régulation tout-terrain, de telle sorte que le mode de régulation standard est engagé en cas de détection d'une situation d'adhérence dissymétrique au niveau des roues d'un essieu.

13. Système antiblocage selon l'une des revendications 1 à 12, **caractérisé en ce que** sont prévus des moyens de désactivation du mode de régulation tout-terrain, de telle sorte que le mode de régulation standard est engagé en cas de franchissement vers le haut d'une vitesse de déplacement prédéfinie.

14. Système antiblocage selon l'une des revendications 1 à 13, **caractérisé en ce que** sont prévus des moyens de détection d'un parcours difficile et la valeur limite inférieure de la plage de valeurs du ralentissement du véhicule est réglée en fonction de la qualité détectée du parcours.

15. Système antiblocage selon la revendication 14, **caractérisé en ce qu'**une valeur limite inférieure plus faible est réglée en présence d'une qualité de parcours plus mauvaise et une valeur limite inférieure plus élevée en présence d'une meilleure qualité de parcours.

16. Système antiblocage selon la revendication 14 ou 15, **caractérisé en ce que** la détection d'un parcours difficile est uniquement prévue dans la position de boîte de vitesses à rapports hauts et pas dans la position de boîte de vitesses à rapports bas du véhicule.

17. Système antiblocage selon l'une des revendications 1 à 16, **caractérisé en ce qu'**en mode de régulation tout-terrain, un patinage de freinage plus élevé jusqu'au blocage des roues est uniquement autorisé au niveau de l'essieu avant.

18. Stratégie de régulation d'un système antiblocage pour véhicules comprenant une première position de boîte de vitesses à rapports hauts pour le déplacement sur route et une deuxième position de boîte de vitesses à rapports bas pour le déplacement tout-terrain, comprenant un mode de régulation standard et un mode de régulation tout-terrain, des valeurs de patinage plus élevées étant autorisées dans le mode de régulation tout-terrain que dans le mode de régulation standard, **caractérisée en ce que** pendant une opération de freinage avec intervention de régulation du système antiblocage,
- le ralentissement absolu du véhicule est déterminé,
- le ralentissement du véhicule est comparé avec une plage de valeurs prédéfinie, et
- le mode de régulation du système antiblocage est commuté automatiquement dans le mode de régulation tout-terrain indépendamment de la position de la boîte de vitesses du véhicule lorsque le ralentissement déterminé du véhicule se trouve dans la plage de valeurs prédéfinie.

19. Stratégie de régulation selon la revendication 18, **caractérisée en ce que** le ralentissement du véhicule est mesuré continuellement pendant une opération de freinage et comparé avec la plage de valeurs prédéfinie.

20. Stratégie de régulation selon la revendication 18 ou 19, **caractérisée en ce que** la plage de valeurs est définie par une valeur limite supérieure et inférieure pour le ralentissement dans le sens longitudinal du véhicule.
